# EUROPEAN PATENT SPECIFICATION

(11) **EP 3 449 287 B1**
(45) Date of publication and mention of the grant of the patent: **20.03.2024**
(21) Application number: 17722162.9
(22) Date of filing: 21.04.2017
(51) Int. Cl.: G01T 1/29, G01V 5/00

(54) **MUOGRAPHIC OBSERVATION INSTRUMENT**
MYOGRAPHISCHES BEOBACHTUNGSINSTRUMENT
INSTRUMENT D'OBSERVATION DE MUOGRAPHIE

(30) Priority: 25.04.2016 JP 2016087436
(43) Date of publication of application: 06.03.2019
(73) Proprietor: Wigner Research Center for Physics of the Hungarian Academy of Science, 1121 Budapest (HU); The University of Tokyo, Tokyo 113-0033 (JP)
(72) Inventor: VARGA, Dezsö, 1121 Budapest (HU); OLÁH, László, 1121 Budapest (HU); HAMAR, Gergö, 1121 Budapest (HU); TANAKA, Hiroyuki, Tokyo 11-8654 (JP); KUSAGAYA, Tarou, Tokyo 11-8654 (JP)
(74) Representative: Krajnyák, András
(86) International application number: PCT/IB2017/052303
(87) International publication number: WO 2017/187308

(56) References cited:
- JP-A- 2007 271 400
- PERRY JOHN ET AL: "Imaging a nuclear reactor using cosmic ray muons", JOURNAL OF APPLIED PHYSICS, AMERICAN INSTITUTE OF PHYSICS, US, vol. 113, no. 18, 14 May 2013 (2013-05-14) , pages 184909-184909, XP012174072, ISSN: 0021-8979, DOI: 10.1063/1.4804660 [retrieved on 2013-05-13]
- NISHIYAMA RYUICHI ET AL: "Application of Emulsion Cloud Chamber to cosmic-ray muon radiography", RADIATION MEASUREMENTS, vol. 83, 22 April 2015 (2015-04-22), pages 56-58, XP029345687, ISSN: 1350-4487, DOI: 10.1016/J.RADMEAS.2015.04.013
- ANASTASIO A ET AL: "The MU-RAY experiment. An application of SiPM technology to the understanding of volcanic phenomena", NUCLEAR INSTRUMENTS & METHODS IN PHYSICS RESEARCH. SECTION A: ACCELERATORS, SPECTROMETERS, DETECTORS, AND ASSOCIATED EQUIPMENT, vol. 718, 7 September 2012 (2012-09-07), pages 134-137, XP028875021, ISSN: 0168-9002, DOI: 10.1016/J.NIMA.2012.08.065

## Description

The invention relates to a muographic observation instrument for the use in a muographic observation system for imaging an internal structure of an object, comprising an arrangement of muon-detecting gaseous detectors arranged to be parallel to a flat surface with certain distance between them.

A conventional muographic observation instrument took the form of a number of orthogonally arranged muon counters. Each muon counter consisted of photomultipliers attached to the longitudinal edge of a square columned scintillator bar, see for example JP 2013-156099. When a muon passes through the muon counter, photons are generated inside the scintillator, which are eventually converted to electrons by the photomultipliers and further amplified to an output signal with large amplitude. Depending on the position of the muon counter outputting the signal, the position of the incident muon can be identified in the muon counter, which is further used to identify the direction of the incident muon as well in the two-scintillator configuration.

John Perry et al.: "Imaging a nuclear reactor using cosmic ray muons", Journal of Applied Physics 113, 184909 (2013) discloses a muographic observation instrument used in a muographic observation system for imaging an internal structure of an object, comprising a pair of muon-detecting gaseous detectors arranged to be parallel to a flat surface with certain distance between them.

Ryuichi Nishiyama et al.: "Application of Emulsion Cloud Chamber to cosmic-ray muon radiography", Radiation Measurements, Volume 83, December 2015, Pages 56-58, discloses a multilayer muon detector with lead plates inserted between nuclear emulsion films in order to reduce the background contamination.

To provide a method of accurately acquiring internal structural information of a structure using horizontal muon of high permeability though week in intensity, JP 2007271400 (A) discloses a method of acquiring internal structure information of structure using multi-division horizontal muon detecting means, wherein a position sensitive detecting means is provided with first and second forward position sensitive detector complexes, a metal member such as an iron member, and a backward position sensitive detector complex.

Anastasio A. et al.: "The MU-RAY experiment. An application of SiPM technology to the understanding of volcanic phenomena", Nuclear Instruments & Methods In Physics Research, Section A: Accelerators, Spectrometers, Detectors, And Associated Equipment, vol. 718, 7 September 2012, pages 134-137, describes the measurement, by means of a cosmic ray telescope, of the absorption in the volcano of muons with near-horizontal trajectories, produced by the interactions of cosmic rays with the atmosphere. Construction and testing of a prototype telescope is proposed based on the use of bars of plastic scintillator with a triangular section whose scintillation light is collected by special fibres, i.e. wave length shifters and transported to Silicon photomultipliers.

The electromagnetic shower that consists of electrons, positrons and gamma rays from the sky causes simultaneous detection at two points of the muographic observation instrument, and these events generate a fake muon signal as if these occurred along a straight line connecting the two detection points. In order to reduce the probability of such incorrect muon signals caused by multiple particles of the electromagnetic shower detected at the same time and along a straight line, multiple muon detectors are placed in a sequence with a set distance between them, and only the event at which all detectors output signals occurring at the same time and along a straight line is considered to be the detection of a muon; this requires a large-sized, heavy weight device.

In addition, although the noise caused by the electromagnetic shower from the vertical direction can be effectively eliminated with this multiple muon detector arrangement, noise of the same kind from the horizontal direction remains substantial. Thus, the elimination of noise from the horizontal direction caused by the electromagnetic shower should also be solved. Furthermore, since both the size and the weight of such a muon detector is large, simple installation of the device is also problematic.

Since the intention is to use the muographic observation instrument for the observation of gigantic objects such as mountains, this makes working conditions and accessing the installation place difficult, and therefore implementing simple installation methods for the device and lightening the device weight might be very important issues.

The main purpose of the present invention is to propose a muon detector device which is more effective against noise, has lighter weight, and can be installed easier.

The above mentioned main purposes have been achieved by a muographic observation instrument for the use in a muographic observation system for imaging an internal structure of an object, comprising an arrangement of muon-detecting gaseous detectors arranged to be parallel to a flat surface with certain distance between them; detachable detector sockets mounting the gaseous detectors; radiation shields composed of lead plates arranged in stainless steel cases; detachable shield sockets mounting the radiation shields, said shield sockets are arranged between the detector sockets; and said detector sockets are attached to wires. The gaseous detector has 1/10 smaller spatial resolution in comparison to a general scintillator. For this reason, a thickness of the radiation shield lead plates that are necessary for eliminating the noise during the muon detection caused by electromagnetic shower that consists of electrons, positrons and gamma rays can be reduced to less than 1/5 of the original thickness. Furthermore, the gaseous detector is lighter than the scintillator detector. As a result of these, the muographic observation instrument maintains the same degree of performance as the scintillation detector while also being less heavy and easier to install, which improves the observation conditions. Moreover, the parallel arrangement of the gaseous detectors mounted to the detector sockets (which are placed in regular intervals in the ground unit) allows us to eliminate the noise caused by the electromagnetic shower from the sky. Furthermore, by mounting each radiation shield to the shield sockets, the noise caused by the electromagnetic shower from horizontal direction can be removed as well. As a result, the muon detector is more light weighted and more effective against noise.

Further aspects of the present invention are set out in the appended dependent claims.

Thus, in a preferred embodiment each shield socket mounting a radiation shield is arranged between two adjacent detector sockets mounting the detectors. The multiple radiation shields and shield sockets between each detector socket allows for simple installation of the device.

In a further preferred embodiment the muographic observation instrument the detector sockets are connected to lifting handles through wires, the shield sockets are connected to lifting handles through wires, and the detector sockets and shield sockets are separately liftable by the lifting handles via the wires.

In this way, the gaseous detectors connected to the detector sockets and the radiation shields connected to the shield sockets are easily detachable. This allows for easy and quick installation of the device.

In a further preferred embodiment the radiation shields, the detector sockets and the shield sockets of the instrument are arranged in a disassemblable manner. In this way, even if the access of the installation place is difficult, by decomposing the device it can be easily carried to the installation place. As a result, the installation of the device becomes easy.

A more detailed understanding of the invention may be had from the following description, given by way of example and to be understood in conjunction with the accompanying drawings wherein:
- Figure 1: shows a possible structure of a muographic observation system using the muographic observation instrument according to the invention;
- Figure 2: shows a schematic side view preferable construction of an embodiment of the muographic observation instrument according to the invention;
- Figure 3: shows a schematic view of the construction shown in Fig. 2 from above;
- Figure 4: shows a schematic representation of the inside part of a gaseous detector;
- Figure 5: shows a cross sectional view of the plane A-A of Figure 4;
- Figure 6: shows a possible construction of the radiation shields;
- Figure 7: shows scattering of the high-energy electrons by the radiation shields; and
- Figure 8: shows a comparison of the muon flux measured by the muon detector according to the invention with the theoretical result as a function of the angle of elevation.

Next a description of the implementation of the present invention will be given by presenting explicit examples.

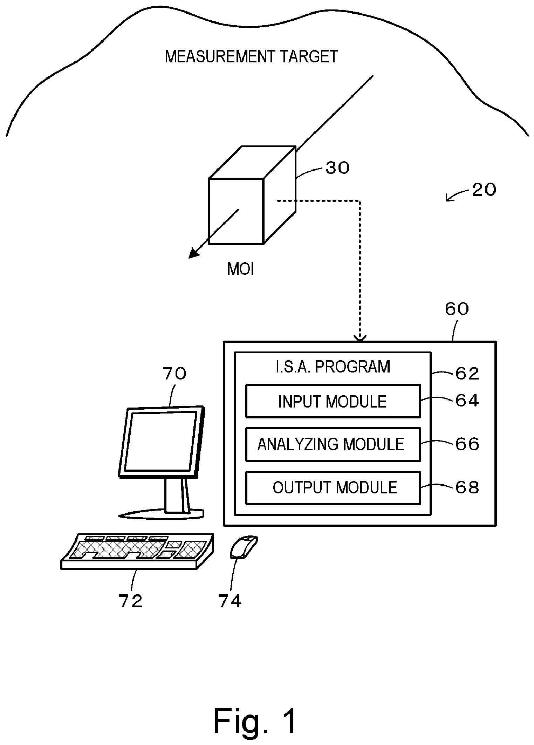

Figure 1 shows the structure of a muographic observation system 20 in which the a muographic observation instrument 30 according to the invention is used. The muographic observation system 20 is arranged around gigantic objects such as mountains and by detecting the muons that have passed through the object then processing the detection results with an analyzer 60, an image of the interior of the object is generated. As shown in Fig.1, the analyzer 60 comprises a software program 62 called "Internal Structure Analyzer ISA" which is a software running on a general-purpose computer. The computer has CPU, ROM, RAM, GPU, VRAM, and hard disc drive in the usual way not shown in the Figures, as well as the ISA program 62 installed on the hard disc drive. The ISA program 62 has a data-input module 64, an analyzing module 66 which checks the input data for the interior part of the target object, and an output module 68 that provides the results of the analyzing module. A monitor 70, a keyboard 72, and a mouse 74 are attached to the computer. Since the ISA program 62 uses basically the same method as described in the literature mentioned in the background part of this document, detailed description of the program is omitted here.

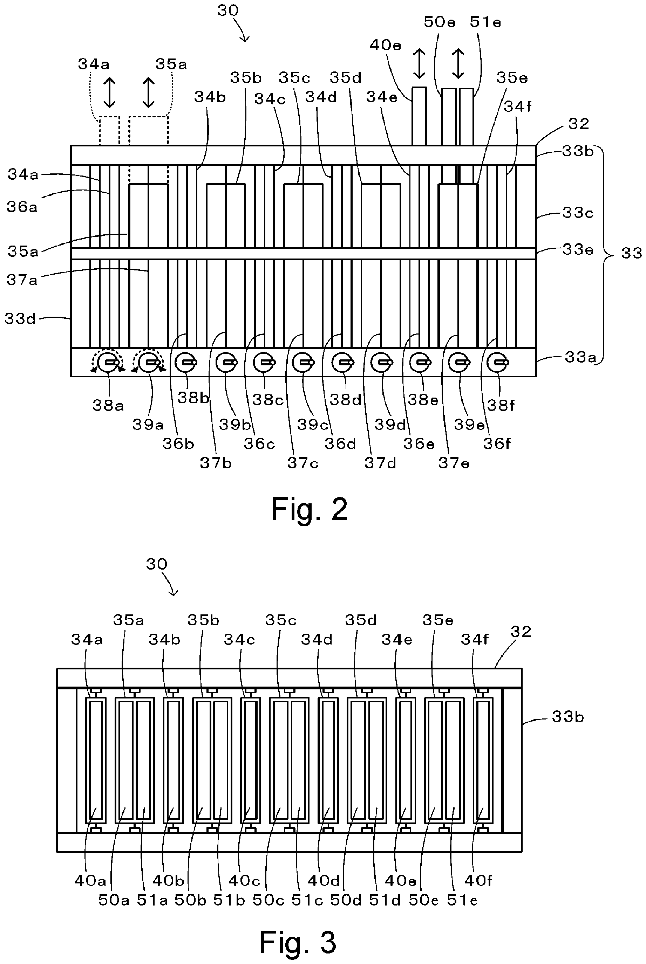

Figure 2 shows a schematic side view of a preferred construction of the muographic observation instrument 30. Figure 3 is a view of the construction shown in Fig.2 from above. The muographic observation instrument 30, as shown in Fig.2, has six gaseous detectors 40a-40f and ten radiation shields 50a-50e, 51a-51f as part of a ground unit 32. Since the six gaseous detectors 40a-40f are identical, they are referred and denoted as gaseous detector 40 in the Figure. Also, the ten radiation shields 50, 51, 50a-50e, 51a-51e are identical, so they are referred as radiation shield 50, 51.

The ground unit 32 has a supporting frame 33, six detector sockets 34a-34f for receiving the six gaseous detectors 40a-40f, five shield sockets 35a-35e for receiving the ten radiation shields 50a-50e, 51a-51f. Each detector socket 34a-34f can be raised or lowered by lifting handles 38a-38f, and similarly the shield sockets 35a-35e are also liftable by lifting handles 39a-39e. Lifting of the detector socket 34a and the shield socket 35a is shown by broken lines in the upper left part of Fig. 2, while the upper right part of Fig. 2 shows the gaseous detector 40e and radiation shields 50e, 51e lifted by the sockets 34e, 35e.

The supporting frame 33 made of stainless steel includes a lower frame part 33a, an upper frame part 33b, side parts 33c, 33d, and a reinforcement part 33e. The six detector sockets 34a-34f are arranged to be parallel to a flat surface with equal intervals, and the five shield sockets 35a-35e are placed between them in a similar arrangement, i.e. in equal intervals. The arrangement of the detector sockets 34a-34f and shield sockets 35a-35e are alternatively repeated in the following order: a detector socket 34a, a shield socket 35a, a detector socket 34b, a shield socket 35b, and so on. Therefore, between each of the neighboring gaseous detectors 40 two radiation shields are inserted.

The lifting handles 38a-38f are connected to the detector sockets 34a-34f through wires 36a-36f. By turning the lifting handles 38a-38f clockwise or anti-clockwise the wires 36a-36f can be wound up or released, and as a result, the detector sockets 34a-34f can be lifted up or down separately. Similarly, the lifting handles 39a-39e are connected to the shield sockets 35a-35e through wires 37a-37e and are used in the same way to lift the shield sockets 35a-35e separately.

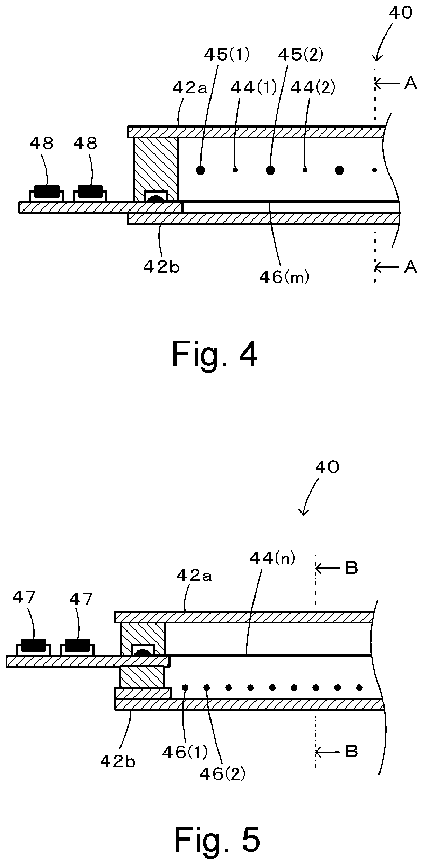

Figure 4 is a schematic representation of the inside part of the gaseous detector 40 while Figure 5 is a cross sectional view of the plane A-A of Figure 4. Thereby, Figure 4 is a cross sectional view of the plane B-B of Figure 5. The gaseous detector 40 consists of a known gas-wire chamber, MWPC, Multi Wire Proportional Chamber, two cathode planes 42a, 42b with anode wires 44(1)...44(n) in their middle part arranged parallel to each other at regular intervals with field wires 45(1)...45(n) put between the anode wires. In the vicinity of the cathode plane 42b a set of signal pick-up wires 46(1)...46(m) are arranged orthogonal to the anode wires 44(1)...44(n), and they are connected to a signal read-out part 48, while the field wires 45(1)...45(n) are connected to a read-out part 47. In this way, the detection of two directions (x and y) is possible in a single signal. The inner part of the gaseous detector is filled with the mixture of Ar and CO₂ gases which is non-flammable and non-toxic. As an example, the diameter of the anode wires 44(1)...44(n) is 25 micrometer while the diameter of the field wires 45(1)...45(n) is 100 micrometer, their length is 1500 mm, and the distance between them is 12 mm. Finally, the diameter of the signal pick-up wires is 100 micrometer and their length is 1500 mm. Therefore, the size of the gaseous detector 40 is about 1550 mm x 1550 mm x 25 mm.

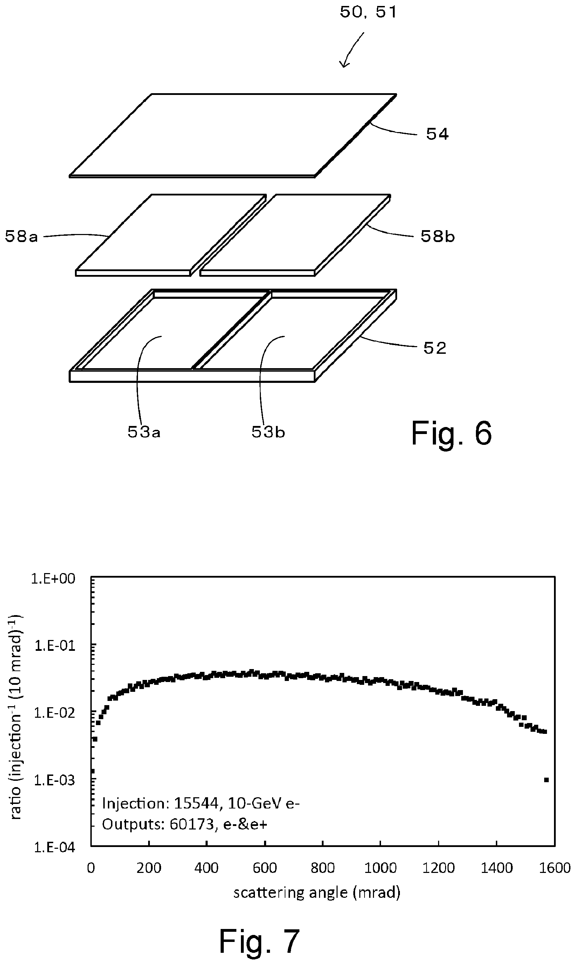

Figure 6 shows the construction of the radiation shields 50, 51. Each radiation shield 50, 51 consists of a bottom frame 52 made of stainless steel, a cover frame 54 made of stainless steel, where the bottom frame 52 has two rectangular flat frames 53a, 53b in which two lead plates 58a, 58b are placed. As an example for the radiation shield 50, 51, the frames 53a, 53b with a length of 1500 mm and a width of 750 mm made of 10 mm thick stainless steel type SUS304 build up the bottom frame 52 in which the lead plates 58a, 58b with length 1500 mm, width 750 mm, and thickness 50 mm are put, and the cover frame 54 has length 1520 mm and width 1530 mm, and it is also made of 10 mm thick stainless steel type SUS304. In this arrangement lead plates are put inside the stainless steel case, and since the lead is soft, it is difficult to maintain its shape under its own weight.

The six gaseous detectors 40a-40f of the muographic observation instrument 30 are mounted by the six detector sockets 34a-34f and arranged in regular intervals to be parallel to a flat surface. Multiple detectors effectively reduce the possibility of fake track generation due to the accidental coincidence of shower particles in the muographic observation instrument. The muon tracks can be identified by connecting the vertex points generated on these gaseous detectors 40 arranged to be parallel to the flat surface. This noise reduction rate is more improved by increasing the number of detectors used for reconstructing the muon tracks because the shower particles hit each gaseous detector 40a-40f randomly and as a result, it is unlikely that those other than muon events will create linear trajectories with more vertex points.

In the muographic observation instrument 30 out of the ten radiation shields 50a-50e, 51a-51e that is mounted to the shield sockets 35a-35e, a pair is placed between each parallel detector socket 34a-34f. Therefore, the noise caused by the electromagnetic shower coming from the horizontal direction is eliminated in this way. Since the muon is strong enough to penetrate many of the radiation shields 50a-50e, 51a-51e this does not affect the detection of the straight track of muons. However, in contrast to muons, the electromagnetic and hadronic particles, mainly electrons, positrons, gamma rays, protons and mesons have a lower power of penetration and therefore, they are terminated or scattered by the radiation shields 50a-50e, 51a-51e. Figure 7 shows the scattering of high-energy electrons by the radiation shields 50, 51 as an example. As described above, one of the main components of the electromagnetic particle is electrons. When vertex points are identified at all of the 6 gaseous detectors 40a-40f with a slight time difference and along a straight line, these are identified as muon events; the electromagnetic shower is identified if they are not detected along a straight line.

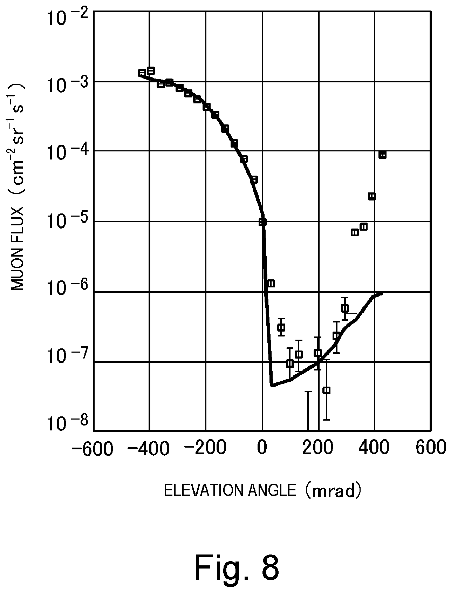

Figure 8 is a comparison of the muon flux measured by the muographic observation system 20 with the theoretical result as a function of the elevation angle. The solid line in the figure shows the theoretically calculated muon flux. The thickness of the mountain is thin in the range of high elevations, and becomes thicker as the elevation angle is decreased. For the elevation-angle values near the zero value at the right-hand side, the maximum thickness of mountain is 2500 m. On the other hand, in the negative side of the value of zero elevation angle there is no mountain, and therefore its thickness vanishes. Thus, the theoretical muon flux is the 'open-sky' distribution in the negative elevation-angle range, while in the positive elevation-angle range it depends on the thickness of the mountain. In the negative elevation-angle range the muon flux observed by the muographic observation system 20 matches with the 'open-sky' theoretical result, which shows that the noise is removed reasonably. For elevation values larger than 300 mrad the observed flux values are much larger compared to the theoretical result, which indicates the presence of holes in the mountain caused by foaming magma and paths of magma. For elevation less than 100 mrad the measured flux is slightly larger than the theoretical expectation, which is thought to be caused by the scattering of muons. As a conclusion, the fake muon tracks were removed reasonably.

Next, the performance of the muographic observation instrument 30 is discussed by comparing with the conventional muographic observation instrument using plastic scintillator bars. Plastic scintillator bars are heavier than the gaseous detector 40 for the same active area. Considering a 1500 mm x 1500 mm sensor area, it gives 800 kg for the weight of the plastic scintillator against the 200 kg weight for the gaseous detector. Furthermore, the spatial resolution of the scintillator detector is 100 mm, while it is 10 mm for the gaseous detector. Therefore, in case of the scintillator detector five times thicker lead plates are necessary to exclude the noise caused by the electromagnetic shower from the horizontal direction. Considering the lead density as 11.34 g/cm³, the weight of a pair of radiation shields 50, 51 mounted to the shield sockets 35a-35e in the present muon detector case is 1500 mm x 1500 mm x 100 mm x 11.3 g/cm³ = 2.55 t which should be compared to the weight 1500 mm x 1500 mm x 500 mm x 11.34 g/cm³ = 12.75 t for the case of the scintillator detector. Therefore, the total weight of the ten radiation shields 50a-50e, 51a-51e is 2.55t for the gaseous detector 30, which should be compared to the weight 12.75 t for the case of the scintillator detector.

The ground unit 32 of the above described muographic observation instrument 30 contains six gaseous detectors 40, ten radiation shields 50a-50e, 51a-51e, six detector sockets 34a-34f, and five shield sockets 35a-35e. Because each gaseous detector 40 has 10 times smaller spatial resolution compared to a general scintillator detector, the thickness of the radiation shields 50a-50e, 51a-51e necessary for removing the noise caused by electromagnetic shower mainly charged electrons e-,e+ during the muon detection is 1/5 smaller in the case of the present muographic observation instrument. In addition, the weight of a gaseous detector 40 is 1/4 smaller than a scintillator detector assuming the same sensor area. As a result, present muographic observation instrument having the same performance as compared to a general detector device using scintillator detector can be made at least five times lighter. Furthermore, due to the structure of the ground unit 32 in the present device containing six gaseous detectors 40a-40f mounted by the detector sockets 34a-34f, the noise caused by the electromagnetic shower from the sky can be efficiently eliminated. In addition, the structure of the ground unit 32 with pairs of the ten radiation shields 50a-50e, 51a-51e mounted by the five shield sockets 35a-35e allows to eliminate also the noise caused by the electromagnetic shower from horizontal direction. Thus, the present muographic observation instrument 30 is lighter, more efficient against noise, and can be installed easier compared to a general scintillator detector.

Since the six detector sockets 34a-34f, the five shield sockets 35a-35e, and the heavy radiation shields 50a-50e, 51a-51e of the present muographic observation instrument 30 can be disassembled freely, the installation of the present device is easy. Furthermore, since the detector sockets 34a-34f and the shield sockets 35a-35e can be lifted up and down individually using the lifting handles 38a-38f, 39a-39e by turning them clockwise or anti-clockwise, the detachment of the gaseous detectors 40a-40f from the detector sockets 34a-34f and the detachment of the radiation shields 50a-50e, 51a-51e from the shield sockets 35a-35e is easy, which makes the installation process of the observation device simple. Besides, concerning the support frame 33 of the ground unit 32, since it can be removed and assembled freely, even when the access of the installation place is difficult, the support frame 33 can be carried there in a disassembled state. As a result, the installation of the device is simple.

Concerning the six gaseous detectors 40a-40e arranged to be parallel to a flat surface with regular intervals between them, the parallel arrangement is important but the details of the intervals between them are not. Moreover, the number of the gaseous detectors is not limited to six, it can be more as seven or less as five.

In the present configuration a pair out of the ten radiation shields 50a-50e, 51a-51e is placed between each gaseous detector 40a-40e, but it is also possible to put more than three radiation shields 50a-50e, 51a-51e between the gaseous detectors 40a-40e instead of a pair.

In the muographic observation instrument 30 the radiation shield 50, 51 is constituted from two housing frames 53a, 53b in which the lead plates 58a, 58b are put, but it is also possible to use three or more housing frames and lead plates. In the muographic observation instrument 30, stainless steel cases are housing the lead plates.

In the muographic observation instrument 30 the detector sockets 34a-34f and the shield sockets 35a-35e can be individually lifted, but if not, it does not matter.

The implementation of the present invention is described here by giving concrete examples, but the invention is not limited only to these examples, it can be implemented in various ways.

The muographic observation instrument according to the invention can be used in a muographic observation system that can have the inner image of a gigantic object such as a mountain.

### List of used reference signs

20: muographic observation system
30: muographic observation instrument
32: ground unit
33: support frame
34a-34f: detector sockets
35a-35e: shield sockets
36a-36f, 37a-37e: wires
38a-38f,39a-39e: lifting handles
40, 40a-40f: gaseous detectors
42a, 42b, 42c: cathode planes
44(1)...44(n): anode wires
45(1)...45(n): field wires
46(1)...46(n): signal pick-up wires
47: read-out part
48: read-out part
50, 51, 50a-50e, 51a-51e: radiation shields
52: bottom frame
53a, 53b: frames
54 cover frame
58a, 58b: lead plates
60: analyzer
62: 'internal state analyzer' program
64: input module
66: analyzing module
68: output module
70: monitor
72: keyboard
74: mouse

## Claims

1. A muographic observation instrument (30) for the use in a muographic observation system (20) for imaging an internal structure of a gigantic object, said instrument (30) comprising
an arrangement of muon-detecting gaseous detectors (40a-40f) arranged to be parallel to a flat surface with certain distance between them;
***characterized in that***
said instrument (30) further comprising
detachable detector sockets (34a-34f) mounting the gaseous detectors (40a-40f); radiation shields (50a-50e, 51a-51e) composed of lead plates arranged in stainless steel cases;
detachable shield sockets (35a-35e) mounting the radiation shields (50a-50e, 51a-51e), said shield sockets (35a-35e) are arranged between the detector sockets (34a-34f); said detector sockets (34a-34f) are attached to wires (36a-36f).

2. The muographic observation instrument according to claim 1, wherein each shield socket (35a-35e) mounting a radiation shield (50a-50e, 51a-51e) is arranged between two adjacent detector sockets (34a-34f) mounting the detectors (40a-40f).

3. The muographic observation instrument according to claim 1 or 2, wherein said detector sockets (34a-34f) are connected to lifting handles (38a-38f) through wires (36a-36f) and said shield sockets (35a-35e) are connected to lifting handles (39a-39e) through wires (37a-37f), and the detector sockets (34a-34f) and shield sockets (35a-35e) are separately liftable by lifting handles (38a-38f, 39a-39e) via the wires (36a-36f, 37a-37f).

4. The muographic observation instrument according to any of claims 1 to 3, wherein the radiation shields (50a-50e, 51a-51e), the detector sockets (34a-34f) and the shield sockets (35a-35e) are arranged in a disassemblable manner.

## Patentansprüche

1. Ein myographisches Beobachtungsinstrument (30) zur Verwendung in einem myographischen Beobachtungssystem (20) zur Abbildung einer inneren Struktur eines gigantischen Objekts, wobei das Instrument (30) umfasst:
eine Anordnung von Myonen-detektierenden Gasdetektoren (40a-40f), die parallel zu einer flachen Oberfläche mit einem bestimmten Abstand zwischen ihnen angeordnet sind;
**dadurch gekennzeichnet, dass**
das Instrument (30) weiterhin Folgendes umfasst:
abnehmbare Detektorsockel (34a-34f), an denen die Gasdetektoren (40a-40f) befestigt sind;
Strahlungsschilde (50a-50e, 51a-51e), bestehend aus in Edelstahlgehäusen angeordneten Bleiplatten;
abnehmbare Schildfassungen (35a-35e) zur Befestigung der Strahlungsschilde (50a-50e, 51a-51e),
die Schildfassungen (35a-35e) sind zwischen den Detektorsockeln (34a-34f) angeordnet;
die Detektorsockel (34a-34f) sind an Drähten (36a-36f) befestigt.

2. Myographisches Beobachtungsinstrument nach Anspruch 1, wobei jede Schildfassung (35a-35e), in der ein Strahlungsschild (50a-50e, 51a-51e) angebracht ist, zwischen zwei benachbarten Detektorsockeln (34a-34f) angeordnet ist, in dem die Detektoren (40a-40f) angebracht sind.

3. Myographisches Beobachtungsinstrument nach Anspruch 1 oder 2, wobei die Detektorsockel (34a-34f) über Drähte (36a-36f) mit Hebegriffen (38a-38f) verbunden sind und die Schildfassungen (35a-35e) über Drähte (37a-37f) mit Hebegriffen (39a-39e) verbunden sind, und die Detektorsockel (34a-34f) und die Schildfassungen (35a-35e) mittels Hebegriffe (38a-38f, 39a-39e) über die Drähte (36a-36f, 37a-37f) separat anhebbar sind.

4. Myographisches Beobachtungsinstrument nach einem der Ansprüche 1 bis 3, wobei die Strahlungsschilde (50a-50e, 51a-51e), die Detektorsockel (34a-34f) und die Schildfassungen (35a-35e) in zerlegbarer Weise angeordnet sind.

## Revendications

1. Instrument d'observation muographie (30) destiné à être utilisé dans un système d'observation myographie (20) pour imager une structure interne d'un objet gigantesque, l'instrument (30) comprenant:
un réseau de détecteurs de gaz (40a-40f) de détection de muons disposés parallèlement à une surface plane avec une certaine distance entre eux;
**caractérisé en ce que**
l'instrument (30) comprend en outre :
des bases de détecteurs (34a à 34f) amovibles auxquelles les détecteurs de gaz (40a à 40f) sont fixés ;
écrans anti-radiation (50a-50e, 51a-51e), constitués de plaques de plomb disposées dans des boîtiers en acier inoxydable;
des douilles de blindage (35a-35e) amovibles pour la fixation des écrans anti-radiation (50a-50e, 51a-51e),
les douilles de blindage (35a à 35e) sont disposées entre les bases de détecteur (34a à 34f);
les bases de détecteurs (34a à 34f) sont fixées à des fils (36a à 36f).

2. Instrument d'observation muographie selon la revendication 1, dans lequel chaque douille de blindage (35a à 35e) dans lequel un écran anti-radiation (50a à 50e, 51a à 51e) est monté est disposé entre deux bases de détecteur (34a à 34f) adjacentes dans lesquelles les détecteurs (40a-40f) sont montés.

3. Instrument d'observation muographie selon la revendication 1 ou 2, dans lequel les bases de détecteurs (34a-34f) sont reliées aux poignées de levage (38a-38f) via des fils (36a-36f) et les douilles de blindage (35a-35e) sont reliées aux poignées de levage (39a-39e) via des fils (37a-37f), et les bases de détecteurs (34a-34f) et les douilles de blindage (35a-35e) peuvent être soulevés séparément à l'aide de poignées de levage (38a-38f, 39a-39e) via les fils (36a-36f, 37a-37f).

4. Instrument d'observation muographie selon l'une quelconque des revendications 1 à 3, dans lequel les écrans anti-radiation (50a-50e, 51a-51e), les bases de détecteurs (34a-34f) et les douilles de blindage (35a-35e) sont disposés de manière démontable.
